(19) Europäisches Patentamt
European Patent Office
Office européen des brevets

(11) **EP 3 073 063 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(51) Int Cl.:
**F01D 17/16** *(2006.01)*        **F01D 5/14** *(2006.01)*

(21) Anmeldenummer: **16156028.9**

(22) Anmeldetag: **17.02.2016**

(54) **LADEEINRICHTUNG UND ZUGEHÖRIGE LEITSCHAUFEL**

CHARGING DEVICE AND CORRESPONDING VANE

DISPOSITIF DE CHARGE ET AUBE DIRECTRICE ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2015   DE 102015205208**

(43) Veröffentlichungstag der Anmeldung:
**28.09.2016   Patentblatt 2016/39**

(73) Patentinhaber: **BMTS Technology GmbH & Co. KG**
**70376 Stuttgart (DE)**

(72) Erfinder:
 • **Poltoratski, M. Sc. Roman**
   **70597 Stuttgart (DE)**
 • **Rentz, Florian**
   **70734 Fellbach (DE)**
 • **Schwäger, Dipl.-Ing. Rüdiger**
   **70499 Stuttgart (DE)**
 • **Sögüt, Senol**
   **71272 Renningen (DE)**
 • **Naunheim, Dirk**
   **70176 Stuttgart (DE)**
 • **Haiser, Heinz Bernd**
   **71638 Ludwigsburg (DE)**
 • **Laubender, Jochen**
   **85051 Ingolstadt (DE)**

(74) Vertreter: **BRP Renaud & Partner mbB**
**Rechtsanwälte Patentanwälte**
**Steuerberater**
**Königstraße 28**
**70173 Stuttgart (DE)**

(56) Entgegenhaltungen:
WO-A1-2009/086959        WO-A1-2013/189506
WO-A1-2015/086205        DE-A1-102009 006 209
DE-A1-102009 031 229

EP 3 073 063 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Ladeeinrichtung mit einer variablen Turbinengeometrie, insbesondere einen Abgasturbolader für ein Kraftfahrzeug, gemäß dem Oberbegriff des Anspruchs 1. Die Erfindung betrifft außerdem eine Leitschaufel gemäß dem Oberbegriff des Anspruchs 7 für eine solche Ladeeinrichtung.

Aus der EP 1 797 283 B1 ist eine Ladeeinrichtung mit einer variablen Turbinengeometrie mit drehbar in einem Schaufellagerring gelagerten Leitschaufeln bekannt, wobei diese Leitschaufeln eine von einer Profilnase zu einem Profilende konvex verlaufende Oberfläche besitzen.

Aus der DE 10 2009 006 209 A1 ist eine weitere Ladeeinrichtung mit einer variablen Turbinengeometrie, insbesondere ein Abgasturbolader für ein Kraftfahrzeug bekannt. Durch eine entsprechend wellenförmige Ausformung der Leitschaufeln in der Art einer schwalbenförmigen Silhouette, lässt sich ein Eintritt eines Gases in mehrere, durch jeweils zwei benachbarte Leitschaufeln begrenzte Zuströmkanäle gleichmäßiger gestalten und derart ausrichten, dass eine Zuströmrichtung in dem Zuströmkanal einer Strömungsrichtung des Gases in Umlaufrichtung entspricht. Hierdurch sollen insbesondere ein geringerer Verschleiß des Verstellapparates und dadurch eine erhöhte Lebensdauer der Ladeeinrichtung erreicht werden können.

Aus der WO 2013/189506 A1 ist eine gattungsgemäße Ladeeinrichtung mit einer variablen Turbinengeometrie mit drehbar an einem Schaufellagerring gelagerten Leitschaufel bekannt, die eine von einer Profilnase zu einem Profilende konvex verlaufende Oberseite aufweist. An einer Unterseite der Leitschaufel ist dabei an der Profilnase eine konkave Ausnehmung angeordnet.

Generell sind bekannte Abgasturbolader bzw. allgemein Ladeeinrichtungen mit einem elektrischen oder pneumatischen Steller ausgerüstet, der eine Verstellung einer variablen Turbinengeometrie bewirkt. Der Steller wird dabei über eine Motorsteuerung angesteuert und bewegt eine Regelstange, die wiederum auf einen Aktuatorenhebel einwirkt und diesen verdreht. Die Rotation des Aktuatorenhebels wird durch die Verstellwelle an die Verstelleinrichtung übertragen. Damit die Kinematik zwischen Stelleinrichtung, Steller und variabler Turbinengeometrie reibungslos funktioniert, müssen sämtliche involvierte Bauteile ein Mindestspiel aufweisen und zudem freigängig sein.

Für die Einstellung bzw. Regelung des Massenstroms spielt das Profil einer in der variablen Turbinengeometrie enthaltenen Leitschaufel eine entscheidende Rolle. So erzeugt die aerodynamische Kraft, welche am Leitschaufelprofil aufgrund der Umströmung anliegt, in Verbindung mit einem Lager (im Bereich eines Leitschaufelschaftes) eine öffnende oder eine schließende Charakteristik. Eine öffnende Charakteristik ist dabei von Vorteil, da bei einem Ausfall der Stelleinrichtung die Leitschaufeln sich öffnen und das Fahrzeug, wenn auch mit reduzierter Leistung, problemlos in eine Werkstatt fahren kann. Bei einer schließenden Charakteristik hingegen wird der Massenstrom derart stark reduziert, dass der Motor so stark gedrosselt wird, dass es zu erheblichen Fehlfunktionen kommen kann. Neben der Regelcharakteristik ist die weitere Anforderung an das Profil, dass es einen möglichst guten Wirkungsgrad aufweist. Der Wirkungsgrad ist vor allem in der geschlossenen Schaufelstellung ein sehr wichtiges Merkmal, da hierbei das Ansprechverhalten (Dynamik) des Motors beeinflusst wird. Ein hoher Wirkungsgrad bei geschlossener Schaufelstellung entspricht einer guten Dynamik.

Die vorliegende Erfindung beschäftigt sich mit dem Problem, für eine Ladeeinrichtung der gattungsgemäßen Art eine verbesserte oder zumindest eine alternative Ausführungsform anzugeben, die neben einer optimalen Regelung auch ein optimiertes Ansprechverhalten zeigt.

Dieses Problem wird erfindungsgemäß durch den Gegenstand des unabhängigen Anspruchs 1, sowie durch den Gegenstand des unabhängigen Anspruchs 7 gelöst. Vorteilhafte Ausführungsformen sind Gegenstand der abhängigen Ansprüche.

Die vorliegende Erfindung beruht auf dem allgemeinen Gedanken, ein Profil einer Leitschaufel einer variablen Turbinengeometrie einer Ladeeinrichtung an einer Profilnase im Bereich einer Unterseite mit einer konkaven Ausnehmung zu versehen, wobei diese Ausnehmung dafür verantwortlich ist, dass die variable Turbinengeometrie bei geschlossenen Leitschaufeln optimal abgedichtet ist und zudem selbst bei geringer Öffnungsstellung eine öffnende Charakteristik und dadurch ein schnelles Ansprechverhalten zeigt. Die erfindungsgemäße Ladeeinrichtung besitzt somit eine variable Turbinengeometrie, die drehbar in einem Schaufellagerring gelagerte Leitschaufeln, die eine von der Profilnase zu einem Profilende konvex verlaufende Oberseite aufweist. An einer Unterseite der Leitschaufeln ist dabei an der Profilnase erfindungsgemäß die konkave Ausnehmung angeordnet. Mit der erfindungsgemäßen Ladeeinrichtung mit den erfindungsgemäßen Leitschaufeln kann aufgrund einer öffnenden Charakteristik des Leitschaufelprofils in Verbindung mit einer sehr geringen Verstellkraft eine optimale Regelung erreicht werden. Aufgrund der konvex ausgebildeten Oberseite der Leitschaufel kann darüber hinaus eine optimierte aerodynamische Kontur erreicht werden, welche wiederum mit einem hohen Wirkungsgrad einhergeht. Durch die an der Profilnase im Bereich der Unterseite vorgesehene Ausnehmung ist es zudem möglich, dass die einzelnen Leitschaufeln in geschlossenem Zustand vergleichsweise dicht aneinander anliegen. Auch bei lediglich geringem Öffnungsgrad der Leitschaufel, das heißt in einer sogenannten "Min-Flow-Position" kann durch die Ausnehmung im Anströmbereich, das heißt an der Unterseite der Profilnase eine optimale Anströmung auf das Turbinenrad erreicht werden.

Erfindungsgemäß verläuft die Unterseite der Leitschaufel ausgehend von der konkaven Ausnehmung an der Profilnase konkav bis zum Profilende, wobei ein Krümmungsradius der Unterseite größer ist als ein Krümmungsradius der Ausnehmung. Mit einer derartigen Ausgestaltung des Leitschaufelsprofils kann ein optimales Anströmverhalten auf das Turbinenrad und damit ein vergleichsweise hoher Wirkungsgrad erzielt werden.

Bei einer vorteilhaften Weiterbildung der erfindungsgemäßen Lösung ist ein Krümmungsradius R der Ausnehmung wie folgt definiert: L/2 > R > L/12, wobei L die Länge der Leitschaufel darstellt. Bevorzugt ist dabei sogar ein Krümmungsradius R im Bereich zwischen L/4 > R > L/8 und besonders bevorzugt im Bereich zwischen L/5 > R > L/7 angesiedelt. Durch einen derartigen Krümmungsradius der Ausnehmung kann ein besonders optimiertes Ansprechverhalten und zugleich ein hoher Wirkungsgrad bei geringen Verstellkräften erreicht werden.

Bei einer weiteren vorteilhaften Ausführungsform der erfindungsgemäßen Lösung ist das Profilende der jeweiligen Leitschaufel mit einem Krümmungsradius R2 ausgerundet, wobei gilt R/15 > R2 > R/25. Durch eine derartige Wahl des Krümmungsradius R2 am Profilende der Leitschaufel kann erreicht werden, dass in der Min-Flow-Stellung der Leitschaufeln die Abgasströmung optimal auf das Turbinenrad gelenkt wird.

Zweckmäßig liegt eine Drehachse der Leitschaufel auf einer Profilmittellinie, wobei ein Abstand der Drehachse zur Profilnase kleiner ist als ein Abstand zum Profilende. Eine derartige Anordnung der Drehachse der Leitschaufeln relativ zum Leitschaufelprofil verbessert ebenfalls die Verstellbarkeit und sorgt zudem für eine öffnende Charakteristik der einzelnen Leitschaufeln.

Die vorliegende Erfindung beruht weiter auf dem allgemeinen Gedanken, eine Leitschaufel für eine zuvor beschriebene variable Turbinengeometrie bzw. eine zuvor beschriebene Ladeeinrichtung anzugeben, welche eine von einer Profilnase zu einem Profilende konvex verlaufende Oberseite aufweist und an welcher an einer Unterseite der Leitschaufel an der Profilnase eine konkave Ausnehmung angeordnet ist. Eine derartige Leitschaufel ermöglicht eine verbesserte Öffnungscharakteristik und aufgrund der geringeren erforderlichen Verstellkräfte auch eine leichte und exaktere Regelbarkeit der variablen Turbinengeometrie.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Wortlaut der Ansprüche zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

Fig. 1　　eine Ansicht auf eine variable Turbinengeometrie einer erfindungsgemäßen Ladeeinrichtung bei geringfügig geöffneten Leitschaufeln,

Fig. 2　　eine Darstellung wie in Fig. 1, jedoch in vergrößerter Darstellung und bei geschlossenen Leitschaufeln,

Fig. 3　　eine Detaildarstellung einer Leitschaufel im Profil.

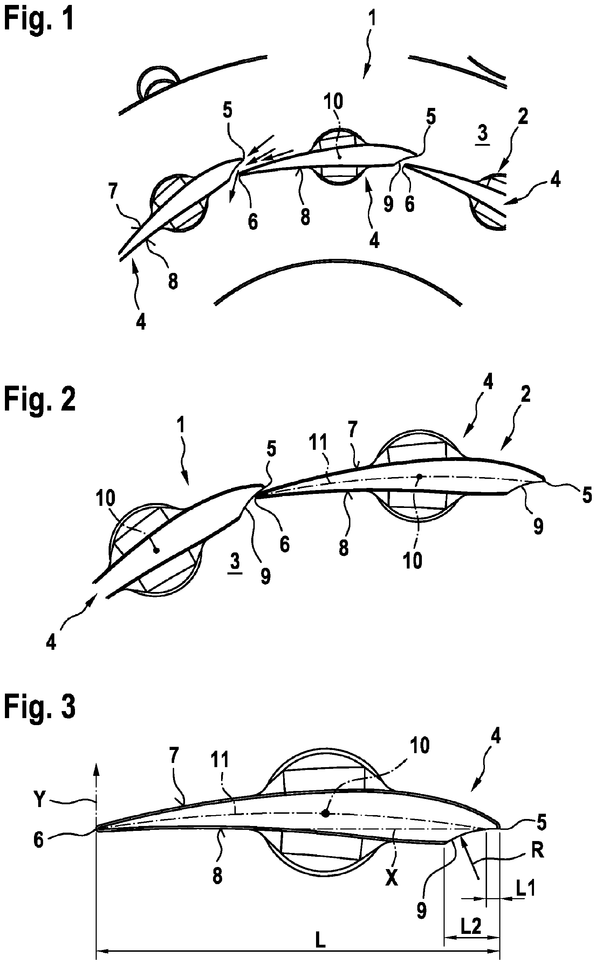

Entsprechend der Fig. 1, weist eine erfindungsgemäße Ladeeinrichtung 1, welche beispielsweise als Abgasturbolader in einem Kraftfahrzeug ausgebildet sein kann, eine variable Turbinengeometrie 2 auf, mit einem Schaufellagerring 3 und drehbar darin gelagerten Leitschaufeln 4. Dieselben Leitschaufeln 4 sind zusätzlich in der Fig. 2 und in der Detaildarstellung der Fig. 3 nochmals dargestellt. Bezüglich der Leitschaufeln 4 ist erkennbar, dass diese eine von einer Profilnase 5 zu einem Profilende 6 konvex verlaufende Oberseite 7 aufweist. An einer Unterseite 8 der Leitschaufel 4 ist an der Profilnase 6 eine konkave Ausnehmung 9 (vgl. insbesondere auch die Fig. 2 und 3) angeordnet. Die Unterseite 8 verläuft dabei ausgehend von der konkaven Ausnehmung 9 ebenfalls konkav bis zum Profilende 6, wobei ein Krümmungsradius der Unterseite 8 größer ist als ein Krümmungsradius R der Ausnehmung 9.

Bevorzugt ist dabei der Krümmungsradius R der Ausnehmung 9 wie folgt definiert:

$$L/2 > R > L/12$$

mit L = Länge der Leitschaufel 4. Die Länge der Leitschaufel 4 kann beispielsweise 18,2 mm betragen.

Besonders bevorzugt ist dabei der Krümmungsradius R der Ausnehmung 9 wie folgt definiert:

$$L/4 > R > L/8,$$

wobei L wiederum die Länge der Leitschaufel 4 darstellt. Bei einer besonders optimierten Form beträgt der Krümmungsradius R der Ausnehmung 9

$$L/5 > R > L/7.$$

Das Profilende 6 ist ausgerundet und zwar vorzugsweise mit einem Krümmungsradius R2, der im Bereich von R/15 > R2 > R/25 liegt. Es hat sich herausgestellt, dass dieses Verhältnis eine optimale Lenkung der Abgasströmung in der Min-Flow-Stellung auf das Turbinenrad ermöglicht.

Betrachtet man die Ausnehmung 9 gemäß der Fig. 3 näher, so kann man erkennen, dass die konkave Ausnehmung 9 nicht an der Spitze der Profilnase 5 beginnt, sondern um einen Abstand L1 davon beabstandet, wobei dieser Abstand L1 ca. 0,5 mm betragen kann. Die gesamte Erstreckung der konkaven Ausnehmung 9 in Längsrichtung ist dabei gemäß der Fig. 3 mit L2 angegeben, wobei L2 ca. 2,5 mm betragen kann.

Des Weiteren liegt bei der erfindungsgemäßen Leitschaufel 4 und der damit ausgestatteten erfindungsgemäßen variablen Turbinengeometrie 2 eine Drehachse 10 der Leitschaufeln 4 auf einer Profilmittellinie L, wobei ein Abstand der Drehachse 10 zur Profilnase 5 kleiner ist als ein Abstand zum Profilende 6, was neben einer erleichterten Verstellbarkeit auch eine verbesserte Öffnungscharakteristik bewirkt.

Betrachtet man nochmals die Fig. 2, so kann man erkennen, dass bei geschlossenen Leitschaufeln 4 die Ausnehmung 9 der einen Leitschaufel 4 an der Oberseite 7 des Profilendes 6 der benachbarten Leitschaufel 4 anliegt, wodurch ein vergleichsweise dichtes Schließen der variablen Turbinengeometrie ermöglicht wird. Bei einer geringen Öffnungsstellung der Leitschaufeln 4, wie dies gemäß der Fig. 1 dargestellt ist, bewirkt die erfindungsgemäß vorgesehene Ausnehmung 9 ein verbessertes Ansprechverhalten, da die Ausnehmung 9 die Öffnungsbewegung der einzelnen Leitschaufeln 4 unterstützt. Hierdurch kann jedoch nicht nur die Öffnungscharakteristik der Leitschaufeln 4 bzw. der variablen Turbinengeometrie 2 positiv beeinflusst werden, sondern zudem selbstverständlich auch der Wirkungsgrad.

Legt man die Leitschaufel 4, wie dies gemäß der Fig. 3 dargestellt ist, in ein Koordinatensystem mit einer X-Achse (Abszisse) und einer Y-Achse (Koordinate) und legt dabei die Vorder- und Hinterkante auf die X-Achse, so weist die Profilmittellinie 10 an jeder X-Stelle positive Werte für Y auf.

Mit den erfindungsgemäßen Leitschaufeln 4 und der erfindungsgemäßen variablen Turbinengeometrie 2 bzw. der Ladeinrichtung 1 lässt sich aufgrund einer öffnenden Charakteristik der Leitschaufeln 4 in Verbindung mit einer sehr geringen Verstellkraft eine optimale Regelung der Ladeeinrichtung 1 erreichen. Aufgrund der optimierten aerodynamischen Kontur, vor allem an der konvex ausgebildeten Oberseite 7, kann darüber hinaus ein sehr hoher Wirkungsgrad erreicht werden. Bei geschlossenen Leitschaufeln 4 liegen diese optimal abdichtend aneinander an, wodurch insbesondere ein Motorbremsbetrieb positiv unterstützt werden kann. Von besonderem Vorteil ist jedoch die Ausnehmung 9 bei geringfügig geöffneten Leitschaufeln 4 (Min-Flow-Position), wie dies gemäß der Fig. 1 dargestellt ist, da in diesem Fall die Ausnehmung 9 die Öffnungsbewegung der Leitschaufeln 4 beim Anströmen unterstützen und dadurch das Ansprechverhalten positiv beeinflusst.

**Patentansprüche**

1. Ladeeinrichtung (1) mit einer variablen Turbinengeometrie (2), insbesondere ein Abgasturbolader für ein Kraftfahrzeug, mit drehbar in einem Schaufellagerring (3) gelagerten Leitschaufeln (4), die eine von einer Profilnase (5) zu einem Profilende (6) konvex verlaufende Oberseite (7) aufweisen, wobei an einer Unterseite (8) der Leitschaufel (4) an der Profilnase (5) eine konkave Ausnehmung (9) angeordnet ist, **dadurch gekennzeichnet, dass** die Unterseite (8) ausgehend von der konkaven Ausnehmung (9) konkav bis zum Profilende (6) verläuft, und dass ein Krümmungsradius der Unterseite (8) größer ist als ein Krümmungsradius R der Ausnehmung (9).

2. Ladeeinrichtung nach Anspruch 1 oder 2, **dadurch gekennzeichnet, dass** ein Krümmungsradius R der Ausnehmung (9) wie folgt definiert ist,

$$L/2 > R > L/12$$

mit L = Länge der Leitschaufel.

3. Ladeeinrichtung nach einem der Ansprüche 1 oder 2, **dadurch gekennzeichnet, dass** ein Krümmungsradius R der Ausnehmung (9) wie folgt definiert ist,

$$L/4 > R > L/8$$

mit L = Länge der Leitschaufel.

4. Ladeeinrichtung nach einem der Ansprüche 1 bis 3, **dadurch gekennzeichnet, dass** ein Krümmungsradius R der Ausnehmung (9) wie folgt definiert ist,

$$L/5 > R > L/7$$

mit L = Länge der Leitschaufel.

5. Ladeeinrichtung nach einem der Ansprüche 2 bis 4, **dadurch gekennzeichnet, dass** das Profilende (6) mit einem Krümmungsradius R2 ausgerundet ist, wobei gilt

$$R/15 > R2 > R/25.$$

6. Ladeeinrichtung nach einem der vorhergehenden Ansprüche,
**dadurch gekennzeichnet,**
**dass** eine Drehachse (10) der Leitschaufel (4) auf einer Profilmittellinie (11) liegt, wobei ein Abstand der Drehachse (10) zur Profilnase (5) kleiner ist als ein Abstand zum Profilende (6).

7. Leitschaufel (4) einer Ladeeinrichtung (1) nach einem der Ansprüche 1 bis 6, die drehbar in einem Schaufellagerring (3) lagerbar ist, die eine von einer Profilnase (5) zu einem Profilende (6) konvex verlaufende Oberseite (7) aufweist, wobei an einer Unterseite (8) der Leitschaufel (4) an der Profilnase (5) eine konkave Ausnehmung (9) angeordnet ist, **dadurch gekennzeichnet,**
**dass** die Unterseite (8) ausgehend von der konkaven Ausnehmung (9) konkav bis zum Profilende (6) verläuft, wobei ein Krümmungsradius der Unterseite (8) größer ist als ein Krümmungsradius R der Ausnehmung (9).

8. Leitschaufel nach Anspruch 7,
**dadurch gekennzeichnet,**
**dass** ein Krümmungsradius R der Ausnehmung (9) wie folgt definiert ist,

$$L/2 > R > L/12$$

mit L = Länge der Leitschaufel.

9. Leitschaufel nach einem der Ansprüche 7 oder 8,
**dadurch gekennzeichnet,**
**dass** ein Krümmungsradius R der Ausnehmung (9) wie folgt definiert ist,

$$L/4 > R > L/8$$

mit L = Länge der Leitschaufel.

10. Leitschaufel nach einem der Ansprüche 7 bis 9,
**dadurch gekennzeichnet,**
**dass** ein Krümmungsradius R der Ausnehmung (9) wie folgt definiert ist,

$$L/5 > R > L/7$$

mit L = Länge der Leitschaufel.

11. Leitschaufel nach einem der Ansprüche 7 bis 10,
**dadurch gekennzeichnet,**
**dass** das Profilende (6) mit einem Krümmungsradius R2 ausgerundet ist, wobei gilt

$$R/15 > R2 > R/25.$$

**Claims**

1. Charging apparatus (1) having a variable turbine geometry (2), in particular an exhaust gas turbocharger for a motor vehicle, having guide vanes (4) which are mounted rotatably in a vane bearing ring (3) and have a top side (7) that runs in convex fashion from a profile nose (5) to a profile end (6), wherein a concave recess (9) is arranged on a bottom side (8) of the guide vane (4) on the profile nose (5),
**characterised in that**
the bottom side (8) runs in concave fashion from the concave recess (9) to the profile end (6), and that a radius of curvature of the bottom side (8) is greater than a radius of curvature R of the recess (9).

2. Charging apparatus according to claim 1 or 2,
**characterised in that**
a radius of curvature R of the recess (9) is defined as follows

$$L/2 > R > L/12$$

where L = length of the guide vane.

3. Charging apparatus according to any of claims 1 or 2,
**characterised in that**
a radius of curvature R of the recess (9) is defined as follows

$$L/4 > R > L/8$$

where L = length of the guide vane.

4. Charging apparatus according to any of claims 1 to 3,
**characterised in that**
a radius of curvature R of the recess (9) is defined as follows

$$L/5 > R > L/7$$

where L = length of the guide vane.

5. Charging apparatus according to any of claims 2 to 4,
**characterised in that**
the profile end (6) is rounded with a radius of curvature R2, wherein

$$R/15 > R2 > R/25.$$

6. Charging apparatus according to any of the preceding claims,
   **characterised in that**
   an axis of rotation (10) of the guide vane (4) lies on a profile centre line (11), wherein a distance from the axis of rotation (10) to the profile nose (5) is smaller than a distance to the profile end (6).

7. Guide vane (4) of a charging apparatus (1) according to any of claims 1 to 6, which can be mounted rotatably in a vane bearing ring (3) and has a top side (7) that runs in convex fashion from a profile nose (5) to a profile end (6), wherein a concave recess (9) is arranged on a bottom side (8) of the guide vane (4) on the profile nose (5), **characterised in that** the bottom side (8) runs in concave fashion from the concave recess (9) to the profile end (6), wherein a radius of curvature of the bottom side (8) is greater than a radius of curvature R of the recess (9).

8. Guide vane according to claim 7,
   **characterised in that**
   a radius of curvature R of the recess (9) is defined as follows

$$L/2 > R > L/12$$

   where L = length of the guide vane.

9. Guide vane according to any of claims 7 or 8,
   **characterised in that**
   a radius of curvature R of the recess (9) is defined as follows

$$L/4 > R > L/8$$

   where L = length of the guide vane.

10. Guide vane according to any of claims 7 to 9,
    **characterised in that**
    a radius of curvature R of the recess (9) is defined as follows

$$L/5 > R > L/7$$

   where L = length of the guide vane.

11. Guide vane according to any of claims 7 to 10,
    **characterised in that**
    the profile end (6) is rounded with a radius of curvature R2, wherein

$$R/15 > R2 > R/25.$$

**Revendications**

1. Dispositif de charge (1) à géométrie de turbine variable (2), en particulier turbocompresseur à gaz d'échappement pour un véhicule automobile, avec des aubes directrices (4) montées de manière rotative dans une bague de palier d'aube (3), qui présentent un côté supérieur (7) s'étendant de manière convexe d'un nez de profilé (5) à une extrémité de profilé (6), dans lequel un évidement concave (9) est disposé sur un côté inférieur (8) de l'aube directrice (4) sur le nez de profilé (5), **caractérisé en ce que** le côté inférieur (8), partant de l'évidement concave (9), est concave jusqu'à l'extrémité de profilé (6), et **en ce qu'**un rayon de courbure du côté inférieur (8) est supérieur à un rayon de courbure R de l'évidement (9).

2. Dispositif de charge selon la revendication 1 ou 2,
   **caractérisé en ce**
   **qu'**un rayon de courbure R de l'évidement (9) est défini comme suit,

$$L/2 > R > L/12$$

   où L = longueur de l'aube directrice.

3. Dispositif de charge selon l'une quelconque des revendications 1 ou 2,
   **caractérisé en ce**
   **qu'**un rayon de courbure R de l'évidement (9) est défini comme suit,

$$L/4 > R > L/8$$

   où L = longueur de l'aube directrice.

4. Dispositif de charge selon l'une quelconque des revendications 1 à 3,
   **caractérisé en ce**
   **qu'**un rayon de courbure R de l'évidement (9) est défini comme suit,

$$L/5 > R > L/7$$

   où L = longueur de l'aube directrice.

5. Dispositif de charge selon l'une quelconque des revendications 2 à 4,
   **caractérisé en ce**
   **que** l'extrémité de profilé (6) est arrondie avec un rayon de courbure R2, où

$$R/15 > R2 > R/25.$$

**6.** Dispositif de charge selon l'une quelconque des revendications précédentes,
**caractérisé en ce**
**qu'**un axe de rotation (10) de l'aube directrice (4) se trouve sur une ligne médiane de profilé (11), dans lequel une distance de l'axe de rotation (10) par rapport au nez de profilé (5) est inférieure à une distance par rapport à l'extrémité de profilé (6).

**7.** Aube directrice (4) d'un dispositif de charge (1) selon l'une quelconque des revendications 1 à 6, qui peut être montée de manière rotative dans une bague de palier d'aube (3), qui présente un côté supérieur (7) s'étendant de manière convexe d'un nez de profilé (5) à une extrémité de profilé (6), dans lequel un évidement concave (9) est disposé sur un côté inférieur (8) de l'aube directrice (4) sur le nez de profilé (5), **caractérisé en ce que** le côté inférieur (8), partant de l'évidement concave (9), s'étend de manière concave jusqu'à l'extrémité de profilé (6), dans lequel un rayon de courbure du côté inférieur (8) est supérieur à un rayon de courbure R de l'évidement (9).

**8.** Aube directrice selon la revendication 7,
**caractérisée en ce**
**qu'**un rayon de courbure R de l'évidement (9) est défini comme suit,

$$L/2 > R > L/12$$

où L = longueur de l'aube directrice.

**9.** Aube directrice selon l'une quelconque des revendications 7 ou 8,
**caractérisée en ce**
**qu'**un rayon de courbure R de l'évidement (9) est défini comme suit,

$$L/4 > R > L/8$$

où L = longueur de l'aube directrice.

**10.** Aube directrice selon l'une quelconque des revendications 7 à 9,
**caractérisée en ce**
**qu'**un rayon de courbure R de l'évidement (9) est défini comme suit,

$$L/5 > R > L/7$$

où L = longueur de l'aube directrice.

**11.** Aube directrice selon l'une quelconque des revendications 7 à 10,
**caractérisée en ce**
**que** l'extrémité de profilé (6) est arrondie avec un rayon de courbure R2, où

$$R/15 > R2 > R/25.$$

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1797283 B1
- DE 102009006209 A1
- WO 2013189506 A1